**Europäisches Patentamt**

**European Patent Office**

**Office européen des brevets**

(11) Veröffentlichungsnummer : **0 381 944 B1**

(12) **EUROPÄISCHE PATENTSCHRIFT**

(45) Veröffentlichungstag der Patentschrift :
**25.11.92 Patentblatt 92/48**

(21) Anmeldenummer : **90100663.5**

(22) Anmeldetag : **13.01.90**

(51) Int. Cl.⁵ : **B01D 53/26**

(54) **Trockenmittelpatrone.**

(30) Priorität : **08.02.89 DE 3903711**

(43) Veröffentlichungstag der Anmeldung :
**16.08.90 Patentblatt 90/33**

(45) Bekanntmachung des Hinweises auf die
Patenterteilung :
**25.11.92 Patentblatt 92/48**

(84) Benannte Vertragsstaaten :
**BE DE FR GB IT**

(56) Entgegenhaltungen :
**DE-A- 2 854 710**
**FR-A- 1 582 746**
**US-A- 3 464 186**
**US-A- 4 072 615**
**US-A- 4 361 425**

(73) Patentinhaber : **SÜD-CHEMIE AG**
**Lenbachplatz 6**
**W-8000 München 2 (DE)**

(72) Erfinder : **Mager, Peter**
**Pinienweg 2**
**W-5000 Köln 71 (DE)**
Erfinder : **Schenkel, Willi**
**Am Römerhof 42**
**W-5000 Köln 40 (DE)**

(74) Vertreter : **Patentanwälte Dipl.-Ing. R.**
**Splanemann Dr. B. Reitzner Dipl.-Ing. K.**
**Baronetzky**
**Tal 13**
**W-8000 München 2 (DE)**

EP 0 381 944 B1

## Beschreibung

Die Erfindung betrifft eine Trockenmittelpatrone, für einen Behälter, ein Gehäuse od. dgl., der bzw. des feuchtigkeitsempfindliches Gut enthält, gemäß dem Oberbegriff von Anspruch 1.

Trockenmittelpatronen sind üblicherweise von außen austauschbar, beispielsweise über eine Muffen- oder Flanschverbindung, an einem Behälter angebracht, der mit dem gegen Feuchtigkeit zu schützenden Gut gefüllt ist. Aufgabe des Trockenmittels in der Trockenmittelpatrone ist es, den Inhalt des Behälters gegen eingeschlossene und nachdringeden Luftfeuchtigkeit zu schützen.

Hierzu ist ein Behälteranschluß zwischen dem Trockenmittel und dem Behälterinnenraum vorgesehen, so daß die Luftfeuchtigkeit aus dem Behälterinnenraum durch das Trockenmittel der Patrone adsorbiert werden kann (statische Trocknung).

Die bekannten Trockenmittelpatronen lassen sich grundsätzlich in geschlossene, offene und kombinierte Syteme einteilen. Die geschlossenen Systeme weisen keine Verbindung zur Außenluft auf, während die offenen System mit der Außenatmosphäre in Verbindung stehen. Die kombinierten Systeme treten nur dann mit der Außenatmosphäre in Verbindung, wenn bei Unter- oder Überdruck in dem Behälter Druckausgleichsventile öffnen.

Bei den geschlossenen Systemen besteht häufig das Problem, daß kein Druckausgleich zwischen dem Behälterinnenraum und der Umgebung möglich ist, so daß man in Einzelfällen Trockenmittelpatronen mit Druckausgleichsventilen vorsieht. Die Trockenmittelpatronen mit den Druckausgleichsventilen sind den kombinierten Systemen zuzurechnen. Die Druckausgleichsventile sprechen erst bei einem gewünschten Unter- oder Überdruck in dem Behälter innenraum an, wobei dann eine Verbindung zur Außenluft hergestellt wird. In diesem Falle strömt allerdings Luft vergleichsweise schnell - entsprechend dem Druckabfall - durch das Trockenmittel in den Behälter oder nach außen.

Bei Behältern mit feuchtigkeitsempfindlichen Gütern, die nicht für größere Druckunterschiede ausgelegt sind, müssen offene Systeme verwendet werden. Diese haben jedoch gemeinhin den Nachteil, daß das Trockenmittel vergleichsweise schnell verbraucht wird, da stets ein Luftaustausch auch mit der Außenluft stattfindet.

Diese Systeme können dennoch in verschiedenen Fällen erforderlich sein, nämlich beispielsweisen wenn die zusätzliche Aufgabe besteht, durch Auswahl bestimmter Trockenmittel wie Aluminiumgel oder Molekularsiebe, Schwefelwasserstoff oder andere Säure-Luftgemische zu neutralisieren und deren ungefilterten Austritt in die Atmosphäre zu verhindern.

Gerade in derartigen Fällen müssen aber stets ausreichende Sicherheitsreserven an Trockenmittel in der Patrone bereitgehalten werden, damit nicht bei einem Schwefelwasserstoffausstoß aufgrund mangelnder Adsorptionskapazität eine entsprechende Umweltverschmutzung erfolgt.

Daher liegt der vorliegenden Erfindung die Aufgabe zugrunde, eine Trockenmittelpatrone gemäß dem Oberbegriff von Anspruch 1 zu schaffen, die prinzipiell für offene Systeme geeignet ist, aber dennoch für den kostengünstigen Langzeitbetrieb ausgelegt ist, so daß auch bei längerer Standzeit des Behälters keine nennenswerte Beladung des Trockenmittels stattfindet.

Diese Aufgabe wird erfindungsgemäß durch Anspruch 1 gelöst. Vorteilhafte Weiterbindungen ergeben sich aus den Unteransprüchen.

Durch den erfindungsgemäß als Diffusionsweg vorgesehenen, besonders langen Außenluftkanal wird nicht nur eine Beruhigung der in freier Verbindung mit der Außenluft stehenden Luft vor deren Berührung mit dem Trockenmittel erreicht. Vielmehr wird auch die Möglichkeit eröffnet, im Bereich des Außenluftkanals eine stehende Luftsäule zu erzeugen, die schon etwas vorentfeuchtet ist und aufgrund der dort geringen Luftumwälzung keine größere Verluste an Trockenmittel hervorruft.

Durch die besonders langen Diffusionswege, die aus Platzgründen oder konstruktionsbedingt auch noch umgelenkt sein können, wird die durch getrocknete Luft verursachte Luftbewegung und Konvektion nach Möglichkeit vermieden. Durch diese Maßnahme bleibt die Trocknungskapazität möglichst lange erhalten. Besonders günstig ist es hierbei ferner, daß ein echter Luftaustausch erst bei einer Druckdifferenz stattfindet, die eine kontinuierliche Luftströmung erzeugt, wie es beim Entleeren, Befüllen des Behälters oder bei starken Temperaturunterschieden auftritt, während bei geringen Druckschwankungen die in dem Außenluftkanal befindliche Luft als Puffer wirkt und Verluste an Trockenmittelkapazität verhindert.

Dennoch kann die erfindungsgemäße Trockenmittelpatrone so ausgelegt sein, daß auch bei schnellerer Be- und Entladung des Behälters keine größeren Druckgradienten erzeugt werden. Hierzu ist der Strömungswiderstand sowohl im Bereich der Trockenmittelpatrone als auch im Bereich von Außenanschlußöffnungen entsprechend bemessen. Die Querschnittsfläche der Außenanschlußöffnungen wird so gewählt, daß durch Regen usw. möglichst wenig Feuchtigkeit eintritt und daß etwaige Windstöße nicht zur Verwirbelung der in dem Außenluftkanal stehenden Luft führen. Jedoch muß die Querschnittsfläche der Außenanschlußöffnungen sicher-

2

EP 0 381 944 B1

stellen, daß der Strömungswiderstand im vertretbaren Rahmen bleibt, wobei auch in Betracht zu ziehen ist, daß die Zeit, die die Luft für das Durchstreichen der Trockenmittelpatrone benötigt, der Trocknungskapazität dieser angepaßt sein sollte.

Besonders günstig ist eine Aufrechtanordnung der Trockenmittelpatrone mit dem sich zwischen einem Außengehäuse und dem Patronengehäuse erstreckenden Außenluftkanal, da dann der Luftaustausch zwischen den oberen und unteren Schichten in dem Außenluftkanal am geringsten ist.

Nach der Art eines Labyrinths kann vorzugsweise die Luft einmal um 180° umgelenkt werden, bevor sie überhaupt in den Bereich des Trockenmittels gelangen kann, wobei im Bereich des Belüftungsrohrs, anschließend an die Umlenkung, wiederum eine Luftberuhigung auftritt.

Das Außengehäuse kann durchsichtig ausgeführt oder mit einem Sichtfenster versehen sein. Dadurch wird ein Farbumschlag einer in dem Bereich des Trockenmittels angebrachten Feuchtigkeitsanzeigekarte von außen sichtbar, ohne daß eine Demontage durchgeführt werden müßte. Bei bestimmten Trockenmitteln wie Blaugel wird eine Beladung oder Sättigung durch eine Verfärbung sichtbar.

Selbstverständlich kann als Trockenmittel neben Aluminiumgel und Molekularsieben auch ein anderes Trockenmittel wie Granulat aus Kieselgel oder Blaugel verwendet werden.

In den Unteransprüchen sind günstige Ausgestaltungen für die Bemaßungen der Querschnittsflächen von Außenanschlußöffnungen und dem Querschnitt bzw. der Länge des Außenluftkanals angegeben. Trotz der vergleichsweise großen Länge des Außenluftkanals wurde der Strömungswiderstand so gewählt, daß eine plötzliche Druckänderung in dem Behälter, wie sie beispielsweise durch Befüllen oder Entleeren ausgelöst wird, schnell ausgeglichen werden kann. Besonders günstig ist es, wenn der Strömungswiderstand und die Bemessung des Patronengehäuses so gewählt sind, daß sie den Festigkeitswerten des zu belüftenden Behälters entspricht, wobei eine gewisse Sicherheitsreserve einbezogen werden sollte.

Weitere Merkmale, Einzelheiten und Vorteile ergeben sich aus der nachfolgenden Beschreibung zweier Ausführungsbeispiele der Erfindung anhand der Zeichnung. Es zeigen:

Fig. 1 einen Schnitt einer Ausführungsform einer erfindungsgemäßen Trockenmittelpatrone;

Fig. 2 eine Ansicht der Trockenmittelpatrone gemäß Fig. 1 von unten; und

Fig. 3 einen Schnitt einer weiteren Ausführungsform einer erfindungsgemäßen Trockenmittelpatrone.

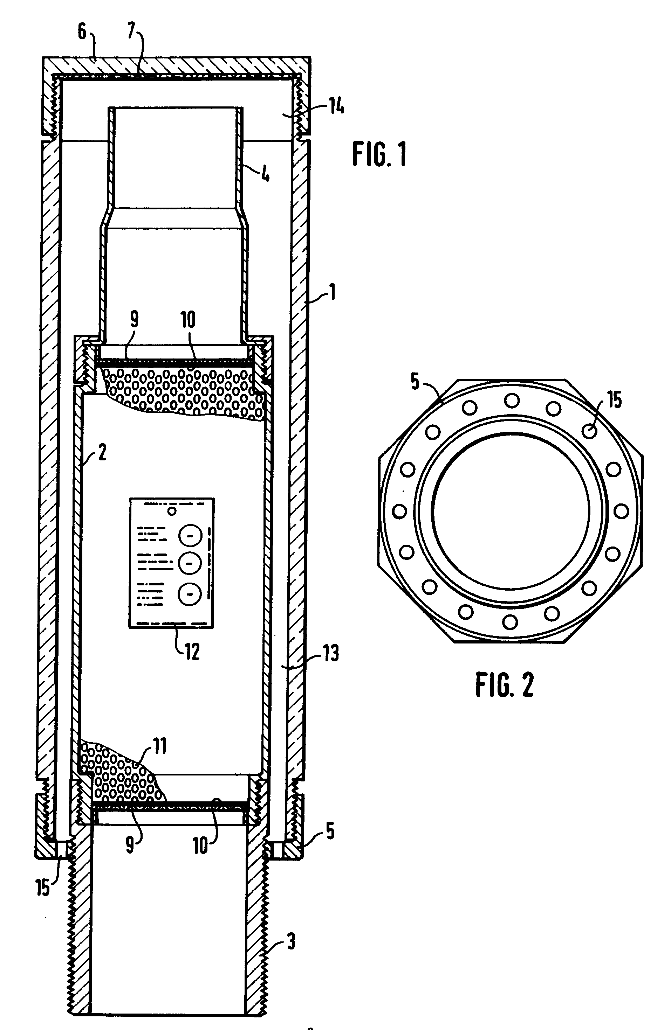

Die in Fig. 1 dargestellte erfindungsgemäße Trockenmittelpatrone weist ein Außengehäuse 1 auf, das zugleich als Schutzrohr ausgebildet ist. Das Außengehäuse 1 umgibt vollständig ein Patronengehäuse 2. Koaxial zu dem Patronengehäuse 2 und nach unten an dieses anschließend ist ein Anschlußelement 3 vorgesehen, das als Rohrstutzen, Muffe oder Flansch ausgebildet sein kann und im Beispielsfall als Rohrstutzen mit einem Außengewinde R2″ ausgebildet ist. Das Anschlußelement 3 dient zur Verbindung der erfindungsgemäßen Trockenmittelpatrone mit einem entsprechend ausgebildeten Teil einer nicht dargestellten Wand od. dgl. eines Behälters, Gehäuses od. dgl., in welchem das feuchtigkeitsempfindliche Gut aufgenommen ist. In dem dargestellten Ausführungsbeispiel ist das Anschlußelement 3 in Form eines Rohrstutzens mit Außengewinde in das entsprechende Innengewinde der in der Behälterwand eingeschweißten Muffe eingeschraubt, wobei zusätzliche Dichtungsmaßnahmen zur Abdichtung zwischen der Muffe und dem Rohrstutzen vorgesehen sind.

In dem dargestellten Ausführungsbeispiel ist oben an das Patronengehäuse anschließend ein Belüftungsrohr 4 ausgebildet. Hier ist die Länge des Diffusionswegs zweckmäßigerweise acht- bis zehnmal größer als der Durchmesser des Belüftungsrohrs. Das Belüftungsrohr 4 ist nach oben offen.

Das Patronengehäuse 2 ist durch ein Außengewinde mit dem Anschlußelement 3 verbunden. Eine Belüftungskappe 5 ist mit ihrem Innengewinde auf das Anschlußelement 3 aufgeschraubt und stellt mit ihrem weiteren Innengewinde eine feste Verbindung zum Außengehäuse 1 her, wie es in Fig. 2 dargestellt ist.

An seinem anderen Ende weist das Außengehäuse 1 ein weiteres Außengewinde auf, auf das eine Abdeckkappe 6 aufgeschraubt ist. Zwischen dem Außengehäuse 1 und der Abdeckkappe 6 ist eine Dichtungseinrichtung 7 vorgesehen, die das Eintreten von Fehlluft oder Regen an dieser Stelle verhindert.

In an sich bekannter Weise ist das Patronengehäuse 2 an seinen beiden Enden je mit einem Siebeinsatz 9 abgeschlossen, auf dem je eine Vliesscheibe 10 aufliegt. In dem Raum zwischen den Vliesscheiben 10 befindet sich ein Trockenmittel 11, das im Beispielsfall als Molekularsieb 0,4 nm ausgebildet ist. Auf der Außenseite des Patronengehäuses 2 ist eine Feuchtigkeitsanzeigekarte 12 angebracht, die zugleich als Beladungsanzeige für das Trockenmittel 11 dient. Wenn das Außengehäuse aus einem transparenten Material ausgebildet ist oder zumindest ein entsprechendes Fenster aufweist, ist es möglich, die Feuchtigkeitsanzeigekarte 12 einzusehen, ohne daß die erfindungsgemäße Trockenmittelpatrone demontiert werden müßte.

Erfindungsgemäß ist ein Außenluftkanal 13 vorgesehen, der sich in dem Bereich zwischen dem Patronengehäuse 2 und dem Außengehäuse 1 erstreckt, in einem oberen Bereich 14 eine Umlenkung um ca. 180° erfährt und dann weiter durch das Belüftungsrohr 4 bis zu dem oberen Siebeinsatz 9 verläuft.

Mit der Außenluft steht der Außenluftkanal 13 über Außenanschlußöffnungen 15 in Verbindung, die sich im Beispielsfalle in der Belüftungskappe 5 unmittelbar neben dem Anschlußelement 3 erstrecken. Hierbei ist dafür Sorge zu tragen, daß die Außenanschlußöffnungen 15 nicht durch zu tiefes Einschrauben des Anschlußelements 3 in die Muffe des nicht dargestellten Behälters abgedeckt werden.

Andererseits bietet die in Fig. 1 dargestellte Anordnung der Außenanschlußöffnungen 15, die ringförmig unten und zur Behälterwand hin in der Belüftungskappe 5 angeordnet sind, die größte Verschmutzungssicherheit.

Wie aus Fig. 1 ersichtlich ist, ist die Bemaßung des Außenluftkanals 13 so gewählt, daß die Länge des Außenluftkanals 13 vergleichsweise groß sowohl gegenüber dem Innendurchmesser des Belüftungsrohrs 4, als auch gegenüber der Querschnittsfläche der Außenanschlußöffnungen 15 ist. Im Beispielsfalle ist der Diffusionsweg von den Außenanschlußöffnungen 15 bis zum oberen Siebeinsatz 9 301 mm lang, während der Innendurchmesser des Belüftungsrohr 4 36 mm beträgt. Das sich hieraus ergebende Verhältnis V beträgt 1:8,36.

Wie aus Fig. 2 ersichtlich ist, sind als Außenanschlußöffnung 15 in dem dargestellten Ausführungsbeispiel 16 Bohrungen mit je 4 mm Durchmesser vorgesehen, so daß die wirksame Querschnittsfläche F 201 mm$^2$ be-trägt.

Es ist günstig, daß die Querschnittsfläche des Außenluftkanals 13 von den Außenanschlußöffnungen 15 an je zunimmt. Dies kann bei dem erfindungsgemäßen Ausführungsbeispiel gemäß Fig. 1 dadurch erfolgen, daß der Ringspalt zwischen dem Patronengehäuse 2 und Außengehäuse 1 relativ schmal gehalten ist, wobei sich an diesen Bereich ein etwas weiterer Bereich zwischen dem Belüftungsrohr 4 und dem Außengehäuse 1 anschließt. Zudem kann das Belüftungsrohr 4 in der in Fig. 1 dargestellten Weise verjüngt sein, so daß hier eine noch weitergehende Vergleichmäßigung auftritt. Diese Auslegung ist besonders günstig, da so eine weitestgehende Strömungsberuhigung und Strömungsvergleichmäßigung zum Siebeinsatz 9 und damit zum Trockenmittel 11 hin auftritt.

Wie es in Fig. 2 dargestellt ist, kann die Belüftungskappe 5 zweckmäßig mit einem Außen-Achteck oder Außen-Sechseck versehen sein, um so ein An- und Abschrauben des Außengehäuses 1 und damit leichtes Auswechseln des Trockenmittels 11 zu erlauben.

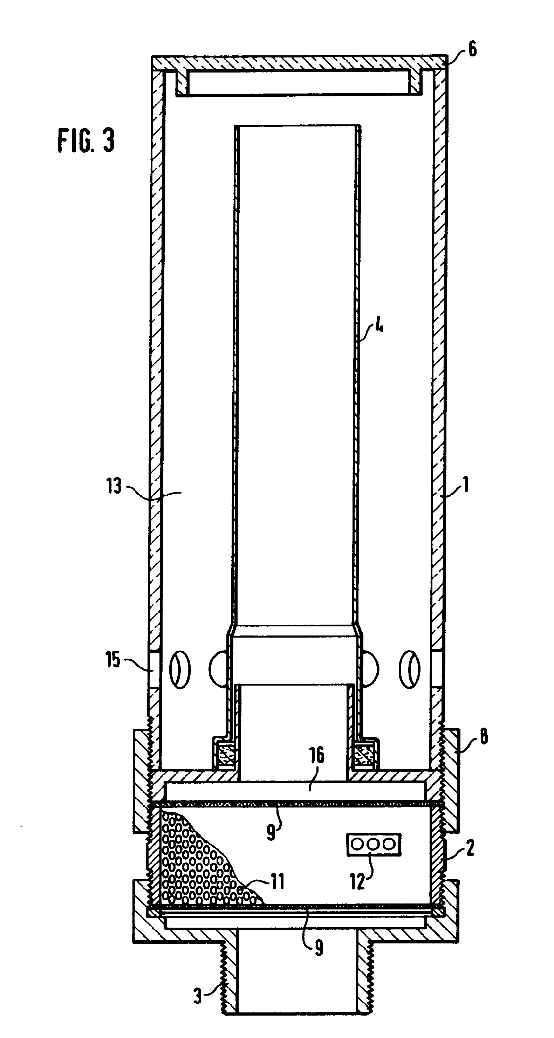

In der Darstellung gemäß Fig. 3 entsprechen gleiche oder ähnliche Teile gleichen oder ähnlichen Teilen der Ausführungsform gemäß Fig. 1 und 2 und sind mit entsprechenden Bezugsziffern gekennzeichnet, so daß eine zusätzliche Beschreibung entbehrlich ist. Aus Fig. 3 ist ein Adapter 8 ersichtlich, über welchen das Patronengehäuse 2 mit dem Außengehäuse 1 verschraubt ist. Wie aus Fig. 3 ersichtlich ist, trägt der Adapter 8 zusätzlich einen Stecksockel für das Belüftungsrohr 4, das bei der Montage somit einfach aufgesteckt werden kann.

Im Unterschied zu dem Ausführungsbeispiel gemäß Fig. 1 und 2 erstrecken sich die Außenanschlußöffnungen 15 radial, und das Belüftungsrohr 4 ist gegenüber dem bisher beschriebenen Ausführungsbeispiel verlängert, so daß die Aufnahme des Trockenmittels 11 in einem Bereich unterhalb der Höhe der Außenanschlußöffnungen 15 verlagert ist. Dementsprechend ist das Trockenmittel zwischen zwei Siebeinsätzen 9 vorgesehen, deren Durchmesser etwa dem Durchmesser des Außengehäuses 1 entspricht, wobei oberhalb des oberen Siebeinsatzes 9 ein ziemlich breiter Strömungsvergleichmäßigungsbereich 16 vorgesehen ist, an den sich das Belüftungsrohr 4 anschließt. Aufgrund dieser Ausbildung erstreckt sich das Belüftungsrohr 4 dementsprechend nahezu über die gesamte Höhe der erfindungsgemäßen Trockenmittelpatrone.

Weiter abweichend gegenüber dem bisher dargestellten Ausführungsbeispiel ist die Abdeckkappe 6 als Sichtfensterdeckel ausgebildet, der eine Sicht durch das Belüftungsrohr 4 erlaubt.

In dem dargestellten Ausführungsbeispiel gemäß Fig. 3 sind zwölf Bohrungen als Außenanschlußöffnungen 15 auf dem Umfang verteilt. Der Durchmesser der Außenanschlußöffnung 15 beträgt in dem in Fig. 3 dargestellten Ausführungsbeispiel 15 mm, so daß sich eine Gesamtfläche von etwa 2120 mm$^2$ ergibt. Der Innen-durchmesser des Belüftungsrohrs 4 beträgt in diesem Ausführungsbeispiel 47 mm, während die Länge des Diffusionswegs von den Außenanschlußöffnungen 15 bis zum oberen Siebeinsatz 9 515 mm beträgt. Hieraus ergibt sich das Verhältnis V zu 1:10,96.

Nachfolgend sind die Ergebnisse von Vergleichsversuchen wiedergegeben, wobei folgende Versuchsparameter bestanden:

Trockenmittel 250 g
Molekularsieb 0,4 nm
Prüfklima 20° ± 2°C
100% relative Feuchtigkeit
Prüfzeit 66 Stunden.

Gemessen wurde die Zunahme des Füllgewichts, entsprechend dem adsorbierten Wasserdampf.

| | Handelsübliche Trockenpatrone | Erfindungsgemäße Trockenpatrone |
|---|---|---|
| Zunahme Wasserdampf | 3,8 g | 0,9 g |

Dies ergibt somit eine auf 422% vergrößerte Lagerfähigkeit der verwendeten Güter, bei ansonsten gleichen Charakteristika, wie auch den gleichen verwendeten Trockenmitteln, wobei noch nicht einmal die Tatsache in Betracht gezogen wurde, daß die Verminderung des Adsorptionsfähigkeit, wie auch die Aufnahme von Wasserdampf, nicht linear, sondern mit einem negativen Logarithmus erfolgt.

Besonders günstig ist es auch, daß das Trockenmittel, das zugleich als Filtermaterial für Schwefelwasserstoff oder andere Säure-Luftgemische verwendet werden kann, behälternah und außenluftfern angeordnet ist, so daß aufgrund des langen Diffusionswegs durch den Außenluftkanal 13 der Austritt derartiger Substanzen in die Atmosphäre sicher verhindert wird.

## Patentansprüche

1. Trockenmittelpatrone für einen Behälter, ein Gehäuse od. dgl., der bzw. das feuchtigkeitsempfindliches Gut enthält, mit mindestens einer Außenanschlußöffnung, über welche die Trockenmittelpatrone mit der Außenluft in Verbindung steht und mit Trockenmittel, das in einem Patronengehäuse aufgenommen ist, dadurch **gekennzeichnet**, daß zwischen der Außenanschlußöffnung (15) und dem Trockenmittel (11) ein Außenluftkanal (13) einen Diffusionsweg bildet, dessen Länge mindestens achtmal, am besten mindestens zehnmal, größer als die Quadratwurzel der atmenden Querschnittsfläche der Trockenmittelpatrone ist.

2. Trockenmittelpatrone nach Anspruch 1, dadurch gekennzeichnet, daß das Patronengehäuse (2) von einem Außengehäuse (1) umgeben ist und der Außenluftkanal (13) sich zum Teil zwischen dem Außengehäuse (1) und dem Patronengehäuse (2) erstreckt.

3. Trockenmittelpatrone nach einem der vorhergehenden Ansprüche, dadurch gekennzeichnet, daß der Außenluftkanal (13) mindestens eine Umlenkung, insbesondere in die Gegenrichtung, aufweist.

4. Trockenmittelpatrone nach einem der vorhergehenden Ansprüche, dadurch gekennzeichnet, daß der Außenluftkanal (13) ein Belüftungsrohr (4) aufweist, das sich oberhalb des Trockenmittels (11) erstreckt und dessen Durchmesser mindestens achtmal geringer als die Länge des Diffusionsweges ist.

5. Trockenmittelpatrone nach einem der vorhergehenden Ansprüche, dadurch gekennzeichnet, daß der Außenluftkanal (13) einen von der Außenluftöffnung (15) zum Trockenmittel (11) hin insbesondere stufenweise zunehmenden Querschnitt hat.

6. Trockenmittelpatrone nach einem der vorhergehenden Ansprüche, dadurch gekennzeichnet, daß das Außengehäuse und das Patronengehäuse im wesentlichen koaxial angeordnet sind und sich aufrecht erstrecken.

7. Trockenmittelpatrone nach einem der vorhergehenden Ansprüche, dadurch gekennzeichnet, daß eine Mehrzahl von Außenanschlußöffnungen (15) vorgesehen sind, deren Querschnittsfläche der Fläche des Belüftungsrohrs (4) oder der atmenden Querschnittsfläche der Trockenmittelpatrone entspricht oder geringer ist.

8. Trockenmittelpatrone nach einem der vorhergehenden Ansprüche, dadurch gekennzeichnet, daß die, insbesondere ringförmig um das Außengehäuse (1) verteilten, Außenanschlußöffnungen (15) dem behälterseitigen Ende der Trockenmittelpatrone benachbart angeordnet sind und sich entweder radial oder axial, je bezogen auf das Patronengehäuse (2), erstrecken.

9. Trockenmittelpatrone nach einem der vorhergehenden Ansprüche, dadurch gekennzeichnet, daß der wirksame Querschnitt der Außenanschlußöffnungen (15) entsprechend dem bei der Befüllung bzw. Entleerung des Behälters maximal auftretenden Strömungsgeschwindigkeit der Luft ausgelegt ist oder, wenn der Behälter nicht befüllt wird, entsprechend der durch Erwärmung bzw. Abkühlung des im Behälter befindlichen Gases bewirkten Strömungsgeschwindigkeit ausgelegt ist.

10. Trockenmittelpatrone nach einem der vorhergehenden Ansprüche, dadurch gekennzeichnet, daß das Patronengehäuse (2) samt in diesem befindlichen Trockenmittel (11) als Patrone mit zylindrischer Grundform, und zwar entweder als nachfüllbare Patrone oder als Einwegpatrone mit verschlossenem Patronengehäuse (2) ausgebildet ist.

11. Trockenmittelpatrone nach einem der Ansprüche 1 bis 9, dadurch gekennzeichnet, daß das Patronengehäuse (2) einen im Verhältnis zur Länge großen Durchmesser aufweist.

12. Trockenmittelpatrone nach einem der vorhergehenden Ansprüche, dadurch gekennzeichnet, daß das Außengehäuse (1) ein mit einer Abdeckkappe (6) verschlossenes Schutzrohr aufweist.

13. Trockenmittelpatrone nach Anspruch 12, dadurch gekennzeichnet, daß das Schutzrohr aus durchsichtigem Material gefertigt ist oder ein Sichtfenster zur Kontrolle der Beladung oder Sättigung des Trockenmittels durch Verfärbung der imprägnierten Felder der Feuchtigkeitsanzeigekarte oder des Trockenmittels mit Indikator.

## Claims

1. A drying agent cartridge for a container, a housing or the like, which contains moisture-sensitive material with at least one external connection opening through which the drying agent cartridge is communicated with the atmosphere and with drying agent which is accommodated in a cartridge casing, characterised in that, between the external connection opening (15) and the drying agent (11), an atmosphere duct forms a diffusion path whose length is at least eight times greater, at best at least ten times greater, than the square root of the breathing cross-sectional area of the drying agent cartridge.

2. A drying agent cartridge according to Claim 1, characterised in that the cartridge casing (2) is surrounded by an outer casing (1) and the atmosphere duct (13) extends partly between the outer casing (1) and the cartridge casing (2).

3. A drying agent cartridge according to any one of the preceding claims, characterised in that the atmosphere duct (13) has at least one change of direction, in particular in the opposite direction.

4. A drying agent cartridge according to any one of the preceding claims, characterised in that the atmosphere duct (13) has a ventiliation tube (4) which extends above the drying agent (11) and whose diameter is at least eight times less than the length of the diffusion path.

5. A drying agent cartridge according to any one of the preceding claims, characterised in that the atmosphere duct (13) has a cross-section which increases in particular in steps from the external connection opening (15) towards the drying agent (11)

6. A drying agent cartridge according to any one of the preceding claims, characterised in that the outer casing and the cartridge casing are arranged substantially coaxially and extend upright.

7. A drying agent cartridge according to any one of the preceding claims, characterised in that a plurality of external connection openings (15) are provided whose cross-sectional area corresponds to or is less than the area of the ventilation tube (4) or the breathing cross-sectional area of the drying agent cartridge.

8. A drying agent cartridge according to any one of the preceding claims, characterised in that the external connection openings (15), which in particular are spaced apart annularly about the outer casing (1), are arranged adjacent to the end of the drying agent cartridge on the container side and extend either radially or axially, in each case relative to the cartridge casing (2).

9. A drying agent cartridge according to any one of the preceding claims, characterised in that the effective cross-section of the external connection openings (15) is designed in accordance with the maximum flow rate of air occuring during the filling or emptying of the container or, when the container is not being filled, is designed in accordance with the flow rate caused by the heating-up or cooling-down of the gas situated in the container.

**10.** A drying agent cartridge according to any one of the preceding claims, characterised in that the cartridge casing (2), together with the drying agent (11) situated therein, is in the form of a cartridge with a cylindrical basic shape, either as a refillable cartridge or as a disposable cartridge with a sealed cartridge casing (2).

**11.** A drying agent cartridge according to any one of Claims 1 to 9, characterised in that the cartridge casing has a diameter which is large in relation to its length.

**12.** A drying agent cartridge according to any one of the preceding claims, characterised in that the outer casing (1) has a protective tube closed by a covering cap (6).

**13.** A drying agent cartridge according to Claim 13 (sic), characterised in that the protective tube is made of transparent material or has a viewing window for monitoring the loading or saturation of the drying agent by the colouration of the impregnated sections of a moisture indicator card or of a drying agent with an indicator.

## Revendications

**1.** Cartouche pour desséchant pour un réservoir, un boîtier ou similaire, qui contient la substance sensible à l'humidité, avec au moins une'ouverture de raccordement sur l'extérieur, par laquelle la cartouche pour desséchant est en communication avec l'air extérieur, et avec du desséchant qui est logé dans un boîtier de cartouche, caractérisée en ce qu'entre l'ouverture de raccordement sur l'extérieur (15) et le desséchant (11) un canal pour l'air extérieur (13) forme un chemin de diffusion dont la longueur est au moins huit fois, mieux encore dix fois plus grande que la racine carrée de l'aire de section respiratoire de la cartouche pour desséchant.

**2.** Cartouche pour desséchant selon la revendication 1, caractérisée en ce que le boîtier de cartouche (2) est entouré d'un boîtier extérieur (1) et en ce que le canal pour l'air extérieur (13) s'étend en partie entre le boîtier extérieur (1) et le boîtier pour la cartouche (2).

**3.** Cartouche pour desséchant selon l'une quelconque des revendications précédentes, caractérisée en ce que le canal pour l'air extérieur (13) présente au moins une déviation, en particulier dans la direction opposée.

**4.** Cartouche pour desséchant selon l'une quelconque des revendications précédentes, caractérisée en ce que le canal pour l'air extérieur (13) présente un tube de ventilation (4) qui s'étend au-dessus du desséchant (11) et dont le diamètre est au moins huit fois plus petit que la longueur du chemin de diffusion.

**5.** Cartouche pour desséchant selon l'une quelconque des revendications précédentes, caractérisée en ce que le canal pour l'air extérieur (13) a une section augmentant en particulier par paliers de l'ouverture pour l'air extérieur (15) au desséchant (11).

**6.** Cartouche pour desséchant selon l'une quelconque des revendications précédentes, caractérisée en ce que le boîtier extérieur et le boîtier de cartouche sont disposés de manière sensiblement coaxiale et s'étendent verticalement.

**7.** Cartouche pour desséchant selon l'une quelconque des revendications précédentes, caractérisée en ce qu'une pluralité d'ouvertures de raccordement sur l'extérieur (15) sont prévues, dont l'aire de section correspond à l'aire du tube de ventilation (4) ou à l'aire de section respiratoire de la cartouche pour desséchant ou est inférieure à celle-ci.

**8.** Cartouche pour desséchant selon l'une quelconque des revendications précédentes, caractérisée en ce que les ouvertures de raccordement sur l'extérieur (15), réparties en particulier en cercle autour du boîtier extérieur (1), sont disposées à proximité de l'extrémité de la cartouche pour desséchant située du côté du réservoir et s'étendent soit dans le sens radial, soit dans le sens axial, par rapport au boîtier de cartouche (2).

7

9. Cartouche pour desséchant selon l'une quelconque des revendications précédentes, caractérisée en ce que la section efficace des ouvertures de raccordement sur l'extérieur (15) est conçue en fonction de la vitesse maximale de circulation de l'air se produisant lors du remplissage ou de la vidange du réservoir ou, si le réservoir n'est pas rempli, en fonction de la vitesse de circulation produite par le réchauffement ou le refroidissement du gaz se trouvant dans le réservoir.

10. Cartouche pour desséchant selon l'une quelconque des revendications précédentes, caractérisée en ce que le boîtier de cartouche (2) et le desséchant (11) qui se trouve dans celui-ci sont conçus comme une cartouche d'une forme de base cylindrique, soit comme une cartouche rechargeable, soit comme une cartouche à usage unique avec un boîtier de cartouche (2) fermé.

11. Cartouche de desséchant selon l'une quelconque des revendications 1 à 9, caractérisée en ce que le boîtier de cartouche (2) présente un grand diamètre par rapport à la longueur.

12. Cartouche pour desséchant selon l'une quelconque des revendications précédentes, caractérisée en ce que le boîtier extérieur (1) présente un tube protecteur fermé par un couvercle de couverture (6).

13. Cartouche pour desséchant selon la revendication 12, caractérisée en ce que le tube protecteur est fabriqué dans un matériau transparent ou présente un hublot pour le contrôle de la charge ou de la saturation du desséchant par décoloration des champs imprégnés de la carte d'indication d'humidité ou du desséchant comportant un indicateur.

FIG. 1

FIG. 2

FIG. 3